# FASCICULE DE BREVET EUROPEEN

(11) **EP 2 588 824 B1**
(45) Date de publication et mention de la délivrance du brevet: **31.07.2019**
(21) Numéro de dépôt: 11726789.8
(22) Date de dépôt: 21.06.2011
(51) Int. Cl.: F28D 1/03, F28F 1/40, F28F 3/02, F28F 13/12

(54) **TUBE DE CIRCULATION DE FLUIDE POUR ECHANGEUR DE CHALEUR ET ECHANGEUR DE CHALEUR COMPORTANT DE TELS TUBES**
FLÜSSIGKEITSZIRKULATIONSROHR FÜR EINEN WÄRMETAUSCHER UND WÄRMETAUSCHER MIT DERARTIGEN ROHREN
FLUID CIRCULATION TUBE FOR A HEAT EXCHANGER AND A HEAT EXCHANGER COMPRISING SUCH TUBES

(30) Priorité: 30.06.2010 FR 1002767; 30.06.2010 FR 1002773
(43) Date de publication de la demande: 08.05.2013
(60) Demande divisionnaire: 14152354.8
(73) Titulaire: Valeo Systemes Thermiques, 78320 Le Mesnil Saint Denis (FR)
(72) Inventeur: MOREAU, Laurent, F-78000 Versailles (FR); BAUERHEIM, Alain, F-51140 Jonchery-sur-Vesle (FR); METAYER, Philippe, F-78960 Voisins le Bretonneux (FR)
(86) Numéro de dépôt international: PCT/EP2011/060351
(87) Numéro de publication internationale: WO 2012/000842

(56) Documents cités:
- EP-A2- 1 243 884
- WO-A2-2006/015029
- JP-A- 2000 329 488
- JP-A- 2003 302 186

## Description

La présente invention concerne un tube de circulation de fluide ainsi qu'un échangeur de chaleur comportant de tels tubes.

Quoique non exclusivement, les échangeurs thermiques concernés sont destinés à équiper des véhicules et correspondent, dans une application préférentielle, aux condenseurs prévus sur les boucles ou circuits de climatisation des véhicules. On pourrait cependant envisager une application de ces échangeurs en tant que radiateurs des boucles ou circuits de refroidissement des moteurs, sans sortir du cadre de l'invention.

D'une manière générale et résumée, la boucle de climatisation de l'habitacle d'un véhicule se compose, principalement, selon le sens de circulation du fluide frigorigène (fréon, CO2, 1234YF) la parcourant, d'un compresseur mettant le fluide sous forme de vapeur haute pression surchauffée, d'un condenseur recevant le fluide pour le refroidir en sortie sous forme liquide haute pression par sa conception en faisceau de tubes parallèles et par le flux d'air externe le balayant, d'un détendeur réduisant la pression et d'un évaporateur où le fluide détendu et condensé est refroidi et échange de la chaleur avec le flux d'air externe à envoyer dans l'habitacle. Le fluide est transformé en phase vapeur à sa sortie pour être amené dans le compresseur pour un nouveau cycle et ainsi de suite, tandis que le flux d'air externe traversant l'évaporateur est refroidi pour fournir l'air climatisé dans l'habitacle.

Structurellement, le condenseur formant l'échangeur de chaleur comprend un faisceau de tubes parallèles et deux collecteurs (ou boîtes collectrices) dans lesquels sont raccordées, de façon fixe et étanche, les extrémités correspondantes des tubes parallèles. Ainsi, le fluide frigorigène de la boucle peut circuler du collecteur amont tourné vers le compresseur, vers le collecteur aval tourné vers le détendeur, à travers les tubes faisant passer le fluide de sa phase vapeur à sa phase liquide par le flux d'air externe et balayant les tubes dont la grande surface optimise l'échange thermique.

Deux technologies sont principalement utilisées pour fabriquer ces tubes, avant assemblage avec les collecteurs. Soit par extrusion, engendrant un coût important (filières spécifiques pour chaque type de tubes) mais facilement brasable car naturellement étanche, soit par pliage, offrant différents avantages, mais plus difficile à braser.

L'invention se rapporte aux tubes de circulation de fluide réalisés à partir de la technologie par pliage. De tels tubes sont connus des documents JP2000329488 A et EP1243884 A2.

Généralement, les tubes à paroi mince pour condenseur sont obtenus à partir d'une bobine de feuille métallique qui, par suite de son déroulement en bande, est progressivement mise en forme à la section transversale souhaitée (par exemple en B aplati) par des outillages spécifiques de pliage ou analogue, puis découpée à la longueur voulue, en tronçons correspondant aux tubes finaux, par un outillage de découpe à couteau agissant dans un plan perpendiculaire au déplacement de la bande pliée.

Ainsi, dans l'exemple indiqué, une fois les tubes en tronçon pliés puis coupés, la paroi mince de ceux-ci présente globalement une section transversale en forme de B aplati, c'est-à-dire, avec une partie de base se prolongeant latéralement, par l'intermédiaire de deux parties de liaison, par deux parties de dessus, qui sont tournées l'une vers l'autre de façon coplanaire et parallèle à la partie de base et qui se terminent par des jambes d'extrémité adjacentes, tournées perpendiculairement vers la partie de base, en ménageant un écartement avec celle-ci. Deux canaux ou espaces internes longitudinaux et parallèles, correspondant aux boucles du B, sont alors définis dans lesquels sont insérés, sur toute leur longueur et de façon connue, les deux réseaux de plis d'un perturbateur ou intercalaire qui sont reliés entre eux par une partie de liaison plane s'insérant dans l'écartement laissé entre les jambes d'extrémité et la partie de base de la paroi pliée du tube.

Ces perturbateurs ont pour rôle, notamment, d'améliorer la performance thermique du condenseur, et la tenue mécanique des tubes qui doivent résister non seulement à la pression d'utilisation en fonctionnement de la boucle (de l'ordre de 20 bars), mais aussi à celle imposée par le cahier des charges, notamment une tenue à l'éclatement des tubes jusqu'à 100 bars, pour des fluides frigorigènes à base de fréon. Cela, bien évidemment, après le passage du condenseur préalablement assemblé (tubes avec perturbateurs emboîtés dans les collecteurs) dans un four de brasage permettant de solidariser notamment les sommets des plis longitudinaux et ondulés de chaque perturbateur sur la face interne de la paroi pliée en B de chaque tube, grâce à des revêtements de placage (clad) prévus sur ceux-ci (perturbateur et/ou paroi du tube) et dont le point de fusion est légèrement inférieur à celui de la matière constituant les tubes et perturbateurs (alliage d'aluminium par exemple).

Cependant, un premier problème rencontré avec de tels tubes concernent l'insertion des réseaux de plis des perturbateurs dans les canaux des tubes qui peut s'avérer quelquefois difficile, voire impossible. En effet, lors de l'opération de découpe des tubes, il peut arriver que les jambes d'extrémité adjacentes et libres de la paroi pliée des tubes ne restent pas dans leur position initiale réalisée lors du pliage, c'est-à-dire sensiblement perpendiculaire à la partie de base des tubes et prennent une inclinaison ou déviation plus ou moins prononcée par rapport à cette position initiale. Cela se produit notamment lors de l'action de découpe par l'outillage à couteau qui peut entraîner facilement, durant le mouvement de découpe, le bord d'entrée des jambes d'autant plus que l'épaisseur de la paroi des tubes est très mince. Les jambes peuvent alors se déformer à ce niveau par rapport aux parties de dessus dont elles sont issues et prendre une position inclinée, déviée. Cela peut également survenir suite à l'usure de la lame du couteau ou à un positionnement imprécis de l'outillage de découpe par rapport à la bande pliée en B, voire de la bande pliée qui défile par rapport à des supports de guidage, etc...

Comme les jambes ne sont plus dans leur position initiale souhaitée, rigoureusement perpendiculaires à la partie de base du tube découpé, il en résulte que, du côté où se situe l'inclinaison des jambes d'extrémité adjacentes, le canal de réception correspondant est dimensionnellement réduit, tandis que l'autre canal est, par opposition, augmenté. On comprend donc que la déformation des jambes d'extrémité ainsi déviées, modifiant la section d'entrée des canaux de réception, au niveau des bords d'entrée coupés de celles-ci, peut empêcher l'insertion du perturbateur double, en particulier le réseau de plis destiné au canal de réception dimensionnellement réduit.

Si le tube défectueux est repéré avant l'insertion, il est naturellement écarté ou alors les jambes inclinées sont éventuellement redressées avant l'engagement du perturbateur. Dans le cas contraire, la tentative d'insertion du perturbateur double dans les canaux inégaux du tube avec les bords d'entrée des jambes dans une position incorrecte, se traduit par la mise au rebut du tube et du perturbateur concernés.

Selon un premier aspect, la présente invention a pour but de remédier à ces inconvénients et concerne un tube de circulation de fluide dont la conception du perturbateur double autorise son montage dans les canaux de réception dédiés du tube, même si les jambes d'extrémité adjacentes du tube occupent une position inclinée incorrecte.

A cet effet, le tube de circulation de fluide pour échangeur de chaleur, obtenu par pliage d'une paroi, présente, une fois la paroi pliée, une partie de base et des jambes d'extrémité libre, tournées perpendiculairement vers la partie de base, ledit tube comprenant un perturbateur à plis, prévus à l'intérieur dudit tube, ledit perturbateur présentant une partie, dite centrale, s'insérant entre les jambes d'extrémité et la partie de base, parallèlement à celle-ci.

Selon l'invention, ladite partie centrale du perturbateur présente, entre au moins deux plis adjacents, par exemple entre les deux réseaux de plis, une largeur égale à la somme des épaisseurs des jambes d'extrémité libres augmentée, respectivement de part et d'autre, d'une distance, dite de sécurité, apte à inclure les dispersions d'inclinaison pouvant être prises par les jambes par rapport à leur position initiale, perpendiculaire à ladite partie de base.

Ainsi, en ménageant une partie centrale à largeur agrandie en regard des jambes, les réseaux de plis du perturbateur peuvent être insérés sans difficultés dans les canaux de réception même si les bords d'entrée des jambes d'extrémité libres sont déviés, après l'opération de découpe notamment.

Bien entendu, cette partie centrale élargie facilitant l'introduction du perturbateur double doit rester dimensionnellement acceptable pour ne pas ou peu réduire le nombre de plis des réseaux servant à l'échange thermique et à la rigidification du tube.

Aussi, selon une approximation grossière, chaque distance de sécurité prévue sur la largeur de la partie centrale de liaison est au plus sensiblement égale à la projection, sur la partie centrale, de la hauteur de la jambe d'extrémité libre avec une inclinaison de 45° par rapport à sa position nominale, perpendiculaire à ladite partie de base.

Cependant, selon une approximation plus fine tenant compte des constatations effectuées sur les jambes défectueuses, chaque distance de sécurité est sensiblement égale à la projection, sur la partie centrale, de la hauteur de la jambe d'extrémité libre avec une inclinaison comprise entre 20° et 30° par rapport à la position nominale, perpendiculaire à ladite partie de base.

Dans un mode préféré de réalisation, lesdites jambes d'extrémité libres sont adjacentes et disposées dans le plan de symétrie longitudinal de la paroi pliée du tube en définissant deux canaux de réception identiques dans lesquels sont insérés lesdits réseaux de plis espacés par ladite partie centrale élargie.

Le profil des plis du perturbateur pourra être sinusoïdal ou crénelé. La largeur L de la partie centrale du perturbateur est comprise, par exemple, entre 0,75 et 1,5 fois la période des plis du perturbateur. Elle est égale, notamment, à environ une fois la période des plis du perturbateur.

Un autre problème rencontré avec les tubes pliés en B munis d'un perturbateur concernent l'apparition d'un problème de brasage au niveau des jambes adjacentes d'extrémité qui sont libres avec la face interne de la partie de base, ceci aussi bien dans le cas de perturbateurs à un réseau de plis engagés dans les canaux respectifs, ou que dans le cas d'un perturbateur avec une partie centrale et deux réseaux de plis, passant dans un espace ménagé à cet effet entre les jambes et la partie de base.

En effet, compte tenu des valeurs de pression ci-dessus demandées dans le cahier des charges, la liaison entre les deux jambes d'extrémité libres et la partie de base de la paroi pliée ou la partie centrale du perturbateur double, laquelle est réalisée par la brasure à ces endroits, est relativement faible et fragile jusqu'à pouvoir se rompre. Lors de l'éclatement sous la pression exercée par le fluide, la liaison cède en même temps que le ou les perturbateurs insérés et les tubes présentent des défauts d'étanchéité. De la sorte, les condenseurs avec ses tubes « éclatés » sont mis au rebut et remplacés, ce qui est particulièrement coûteux.

Selon un autre aspect, en dehors de la portée de l'invention, un tube de circulation fluidique à perturbateur intégré pour échangeur de chaleur est divulgué, dont la réalisation garantit la tenue mécanique même à des valeurs de pression élevées.

Le tube est obtenu par pliage et comprend une paroi définissant, une fois pliée, une partie de base et des jambes d'extrémité tournées vers la partie de base, ledit tube comprenant au moins un perturbateur ondulé à plis introduit dans ledit tube.

Certains des plis, dits plis de renfort, du ou des perturbateurs sont prévus en regard desdites jambes d'extrémité de manière à ce que le ou lesdits plis de renfort forment avec lesdites jambes d'extrémités et ladite partie de base un renfort de liaison entre lesdites jambes et ladite partie de base.

Ainsi, après passage de l'échangeur assemblé (tubes, perturbateurs et boîtes collectrices) dans le four de brasage, chaque pli de renfort est rendu solidaire, par les brasures issues des revêtements de placage déposés usuellement sur le perturbateur et/ou la paroi mince, de la jambe d'extrémité correspondante et de la partie de base en regard. Grâce à ces plis de renfort de liaison brasés associant les jambes d'extrémité initialement libres et la partie de base perpendiculaire, on améliore la résistance mécanique des tubes qui peuvent ainsi supporter des fortes pressions sans risque de déformation ni d'éclatement. Et cela d'autant plus que les effets de capillarité et de mouillabilité sont favorisés par les plis de renfort avec les jambes et la partie de base, la brasure ayant tendance à s'écouler et à s'accumuler sur les zones de contact entre pièces et donc entre les plis de renfort, les jambes et la partie de base.

On remarque, aussi, que ce sont les perturbateurs eux-mêmes qui constituent par le profil des plis concernés, le renforcement du tube plié sans avoir à ajouter d'autres éléments.

Les tranches latérales terminant les jambes d'extrémité sont sensiblement au contact de ladite partie de base et au moins un perturbateur ondulé est alors logé dans ledit tube, par exemple dans chacun desdits canaux internes. Le pli de renfort de liaison du ou des perturbateurs est défini par un pli d'extrémité du perturbateur venant sensiblement au contact de la jambe correspondante et de la partie de base.

Dans un premier exemple, ledit pli d'extrémité de renfort de chaque perturbateur est, en coupe transversale, coudé et forme un angle droit permettant audit pli de s'appliquer contre la jambe d'extrémité correspondante et la partie de base, perpendiculaires entre elles.

Dans un second exemple, ledit pli d'extrémité de renfort de chaque perturbateur forme, en coupe transversale, un congé arrondi venant sensiblement au contact de la jambe d'extrémité correspondante et de la partie de base, en ménageant un jeu interne entre celles-ci et ledit pli à congé arrondi.

Quelle que soit la solution retenue, le tube acquiert une remarquable rigidité par ces plis de renfort qui s'adossent contre les jambes d'extrémité, initialement libres et adjacentes dans le cas d'un profil en B, et la paroi de base, et par les zones ou cordons de brasure qui se forment notamment, selon les exemples, tout du long des bords des plis coudés et des plis arrondis en remplissant alors, dans cette dernière configuration, le jeu interne.

Il est aussi possible que les tranches latérales terminant les jambes d'extrémité sont distantes de ladite partie de base et un perturbateur double à deux réseaux ondulés de plis est logé dans ledit tube, lesdits deux réseaux ondulés de plis étant reliés entre eux par une partie centrale plane qui s'engage dans un écartement prévu entre les jambes d'extrémité et la partie de base de la paroi pliée, lesdits plis de renfort étant issus de ladite partie centrale du perturbateur et se prolongeant, notamment en direction de la partie de dessus correspondante, de manière proche des jambes d'extrémité respectives. Chacun des réseaux ondulés de plis est situé, par exemple, dans l'un desdits canaux internes.

Dans le mode à perturbateur double, les cordons de brasure se forment, d'une part, entre la jambe et le prolongement du pli de renfort s'écartant progressivement de celle-ci en direction de la partie de dessus correspondante, et, d'autre part, entre ce prolongement et la partie de base.

Comme dans le premier aspect de l'invention, le profil des plis du perturbateur peut être sinusoïdal ou à créneaux, de préférence, trapézoïdaux.

Selon un exemple de réalisation, commun aux deux aspects précédents, ladite partie de base de la paroi du tube se prolonge latéralement par l'intermédiaire de deux parties de liaison et par deux parties de dessus tournées l'une vers l'autre qui se terminent par lesdites jambes d'extrémité. Ledit tube définit, notamment, au moins deux canaux internes longitudinaux et parallèles à l'intérieur desquels sont aptes à s'insérer deux réseaux de plis du perturbateur, éventuellement reliés entre eux par ladite partie centrale. Les sommets des plis sont, après brasage, solidaires desdites parties de base et/ou de dessus. Les tubes sont, notamment, du type à paroi mince.

L'invention concerne également un échangeur de chaleur qui comporte avantageusement des tubes parallèles de circulation de fluide à perturbateurs intégrés, tels qu'ils sont définis précédemment. De préférence, l'échangeur de chaleur avec ces tubes de circulation de fluide définit le condenseur d'une boucle de climatisation pour véhicule automobile ou analogue.

Les figures annexées feront bien comprendre comment l'invention peut être réalisée. Sur ces figures, des références identiques désignent des éléments semblables.
La figure 1 est une vue schématique d'une boucle ou circuit de climatisation d'un véhicule, équipé d'un échangeur de chaleur à tubes de circulation de fluide conformément à l'invention.
La figure 2 est une vue en coupe transversale de l'un des tubes de circulation de fluide de l'échangeur, avec un perturbateur à double réseau de plis et à insertion amélioré, conformément au premier aspect de l'invention, dans ledit tube, la coupe étant réalisée dans une partie centrale du tube.
La figure 3 est une loupe agrandie A de la partie centrale du tube de la figure 2 montrant, en vue de côté, la distance de ladite partie centrale séparant les deux réseaux de plis du perturbateur double pour faciliter l'insertion de celui-ci selon l'inclinaison éventuelle des jambes d'extrémité du tube.
Les figures 4 et 5 sont des coupes transversales d'un tube de circulation fluidique de l'échangeur en dehors de la portée des revendications, avec des perturbateurs à simple réseau de plis et à renforts de liaison respectivement arrondi et à angle droit.
Les figures 4A et 5A sont des loupes agrandies A et B respectivement des figures 4 et 5, montrant notamment les zones de brasure.
La figure 6 est une coupe transversale d'un tube de circulation fluidique de l'échangeur en dehors de la portée des revendications, avec un perturbateur à double réseau de plis et à renforts de liaison coudés.
La figure 6A est une loupe agrandie C de la figure 6, montrant notamment les zones de brasure.

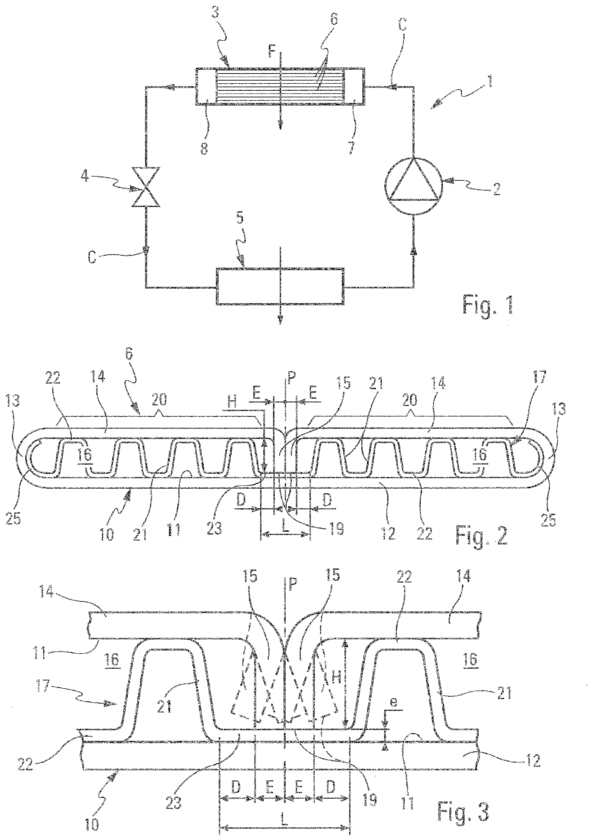

La boucle ou circuit de climatisation 1 représentée schématiquement sur la figure 1 comprend, de façon connue et décrite brièvement ci-dessus, selon le sens de circulation C du réfrigérant, un compresseur 2, un condenseur 3 faisant office d'échangeur de chaleur, un détendeur 4 et un évaporateur 5. Le condenseur 3 comprend un faisceau de tubes parallèles 6 dont les extrémités sont reliées, de manière fixe et étanche, à des boîtes collectrices respectivement amont 7, tournée vers le compresseur 2, et aval 8, tournée vers le détendeur 4.

Le réfrigérant entre en phase vapeur dans la boîte collectrice amont 7, puis traverse les tubes d'échange thermique 6 pour sortir en phase liquide par la boîte collectrice aval 8, par le flux d'air extérieur F généralement forcé traversant perpendiculairement les tubes lesquels participent activement à ce changement de phase. L'échangeur pourra aussi comprendre, entre les tubes, des intercalaires ondulés, non représentés, permettant d'augmenter la surface d'échange avec l'air.

Pour information, en fonction du fluide utilisé, les tubes 6 sont soumis à une pression d'environ 20 bars mais doivent résister avant éclatement à 100 bars.

Un tel tube 6 représenté sur la figure 2 est réalisé, dans le cas qui nous préoccupe, selon la technologie par pliage. On y voit que ce type de tube présente une paroi 10 mince, par exemple de l'ordre de 0,2 à 0,5 mm d'épaisseur. Il est obtenu par pliage pour présenter en général, quoique non exclusivement, une section transversale en forme de B aplati avec un plan de symétrie longitudinal P passant perpendiculairement entre les deux boucles du B aplati.

Ainsi, le tube 6 se compose, une fois la paroi 10 pliée, d'une partie de base ou médiane 12 laquelle se prolonge latéralement, par l'intermédiaire de deux parties de liaison arrondies 13, par deux parties de dessus ou supérieures identiques 14 qui sont coplanaires et parallèles à la partie de base 12. A leur tour, les parties de dessus 14, qui s'étendent chacune sur environ la moitié de la largeur de la partie de base, se terminent par des jambes d'extrémité adjacentes, sensiblement l'une contre l'autre, et libres 15, qui sont identiques et pliées dans une position nominale telle qu'elles doivent être théoriquement après pliage et découpe, c'est-à-dire perpendiculaire, de sorte à revenir vers la partie de base 12. De cette manière, les parties arrondies 13, supérieures 14 et les jambes 15 définissent, avec la partie de base 12, deux canaux ou espaces internes parallèles 16, s'étendant sur toute la longueur du tube 6 et qui sont sensiblement identiques dimensionnellement ici puisque les jambes adjacentes se trouvent dans le plan de symétrie P du tube. Selon d'autres modes de réalisation, un pliage différent pourrait permettre d'obtenir plus de deux canaux, de section identique ou non.

Un écartement e est, par ailleurs, initialement prévu entre les tranches latérales 19 terminant les jambes d'extrémité libres 15 et la face interne 11 de la partie de base 12 de la paroi pliée du tube, et autorise l'insertion d'un perturbateur ou intercalaire ondulé 17.

Ces perturbateurs sont utilisés afin d'améliorer la performance thermique et la tenue mécanique (résister à la pression du réfrigérant dans le condenseur), un perturbateur 17 étant introduit dans les canaux internes 16 de la paroi mince 10 ainsi pliée, comme le montrent les figures 2 et 3.

Ce perturbateur 17 est pour rappel obtenu à partir d'une feuille mince métallique qui est travaillée pour prendre dans ce cas une forme ondulée sinusoïdale à deux réseaux 20 de plis parallèles 21, dont les sommets 22 des plis 21 touchent la face interne 11 de la paroi pliée 10 en s'étendant parallèlement le long du tube 6, et qui sont reliés l'un à l'autre par une partie centrale plane 23. Le montage du perturbateur 17 dans le tube 6 s'effectue en engageant puis en glissant les deux réseaux 20 de plis ondulés 21 et la partie centrale plane 23 respectivement dans les deux canaux internes 16 et dans l'écartement e des tranches 19 des jambes 15 avec la partie de base 12. L'épaisseur du perturbateur est, par exemple, de l'ordre de 0,05 à 0,150 mm. Afin de simplifier le montage, il pourra être prévu d'insérer le perturbateur alors que le tube présente un jeu supérieur à e puis d'opérer une opération de laminage de l'ensemble pour terminer le pliage du tube, notamment mettre en contact le perturbateur et les jambes avec les parois du tube.

De façon nominale, c'est-à-dire à distance des extrémités du tube ou niveau desdites extrémités si la découpe n'a pas entrainé de déviation des jambes 15, les extrémités 19 desdites jambes 15 sont au contact de l'une de faces de la partie centrale 23 du perturbateur, notamment, par leur tranche. Par son autre face, la partie centrale 23 du perturbateur est au contact de la partie de base (12) du tube.

L'assemblage ultérieur du perturbateur 17 et du tube 6 est par la suite réalisé usuellement par brasage dans un four grâce à des revêtements de placage non représentés, déposés sur la face interne de la paroi pliée du tube et/ou sur les faces ondulées du perturbateur double.

Selon le premier aspect de l'invention, pour garantir une introduction aisée du perturbateur 17 dans le tube 6, sans risque de détériorations de ceux-ci, la partie centrale plane de liaison 23 du perturbateur est élargie pour présenter une largeur L bien supérieure à la somme des épaisseurs E des deux jambes d'extrémité libres et adjacentes 15, correspondant à deux fois l'épaisseur de la paroi pliée formant le tube 6. Ceci pour tenir compte des éventuelles inclinaisons ou déviations pouvant être prises par les jambes adjacentes 15 pour les raisons évoquées précédemment, alors que les jambes doivent occuper une position nominale, après pliage et découpe, sensiblement perpendiculaire à la partie de base 12, dans le plan de symétrie P, comme le montre la figure 2.

Ainsi, à la somme des épaisseurs E des jambes attenantes 15 sont ajoutées, respectivement de part et d'autre de celles-ci, lorsque les jambes se trouvent en position initiale perpendiculaire, des distances de sécurité D indiquées sur les figures 2 et 3 et dont le but est d'inclure les dispersions d'inclinaison acceptables pouvant être prises par les jambes par suite de l'opération de découpe, par rapport à leur position nominale perpendiculaire à la partie de base 12.

Une inclinaison maximale des jambes serait qu'elles occupent une position totalement rabattue contre la face interne 11 des parties de dessus 14, de sorte que chaque distance de sécurité D serait sensiblement égale à la hauteur H des jambes. Une estimation plus raisonnable de cette distance de sécurité D correspond à une inclinaison au plus égale à 45°, généralement inférieure à 20°-30° respectivement de part et d'autre du plan de symétrie longitudinal P, c'est-à-dire à la position nominale verticale des jambes sur les figures 2 et 3. Ce qui se traduit par une distance de sécurité D égale à la projection, sur la partie centrale de liaison 23, de la hauteur H inclinée au maximum de 45°, soit H/√2 ou moins si l'on souhaite limiter la distance D à une inclinaison inférieure possible des jambes.

Les positions déviées pouvant être prises par les bords d'entrée des jambes 15, respectivement de part et d'autre du plan P, sont montrées en trait pointillé sur la figure 3

Ainsi, la largeur de la partie centrale plane 23, séparant les deux réseaux 21 de plis ondulés 22, est sensiblement égale à 2(E + D), comme le montre plus clairement la figure 3. Bien évidemment, cette estimation de la distance de sécurité pourrait être affinée, réduite ou augmentée, sans sortir du concept de l'invention qui est d'avoir une partie centrale de liaison 23 suffisamment large pour insérer sans difficultés les réseaux de plis du perturbateur 17 dans les canaux de réception 16 du tube 6, même avec les bords d'entrée des jambes adjacentes 15 quelque peu déviés.

Aussi, il convient de préciser que l'extension de la largeur L de la partie centrale 23 ne doit pas se faire au détriment du nombre de plis 21, qui doit rester acceptable pour assurer l'échange thermique et la tenue mécanique du tube. On voit, sur les figures 2 et 3, que les plis des réseaux, en regard des jambes sont finalement proches de celles-ci sans compromettre l'intégrité du tube ; en revanche, les plis 25 tournés en regard des parties de liaison arrondies 13 ont un profil qui épouse celles-ci.

De chaque côte de la partie centrale 23 démarre un pli du perturbateur 17, par exemple identique aux autres plis de celui-ci.

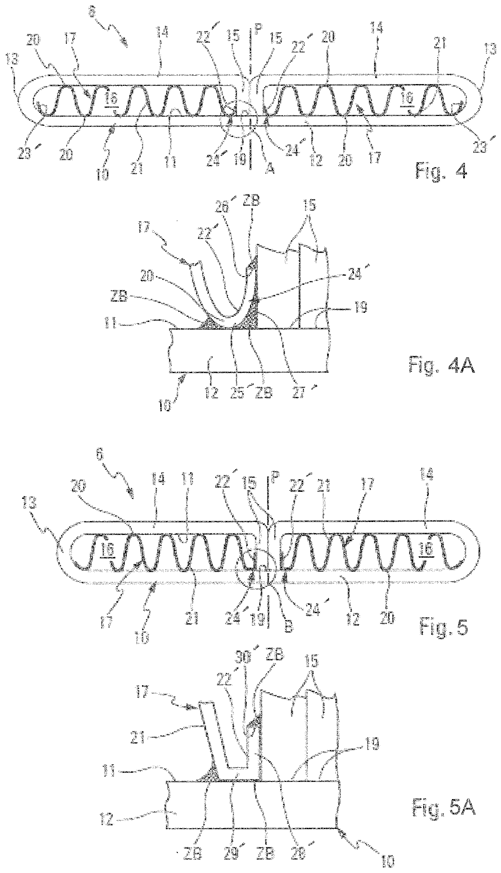

Selon un aspect en dehors de la portée de l'invention, illustré aux figures suivantes, on trouve à nouveau un tube 6, représenté en coupe transversale sur les figures 4 à 6, présentant les mêmes caractéristiques que le tube 6 déjà décrit en relation avec le précédent aspect de l'invention.

Cela étant, aux figures 4 et 5, deux perturbateurs 17 sont introduits dans les canaux internes 16 de la paroi mince 10 ainsi pliée, au lieu du perturbateur unique 17 décrit en relation avec la figure 2. Ces perturbateurs 17 sont sensiblement identiques et obtenus usuellement à partir d'une feuille mince métallique qui est travaillée pour prendre dans ce cas une forme ondulée sinusoïdale à simple réseau de plis 21, de sorte que les sommets 20 des plis parallèles 21 touchent la face interne 11 de la paroi pliée 10 en s'étendant parallèlement le long du tube 6. Comme le perturbateur unique 17 du précédent aspect de l'invention, ces deux perturbateurs 17 servent à améliorer la performance thermique et la tenue mécanique (résister à la pression du réfrigérant dans le condenseur).

Cela étant, les plis d'extrémité de chaque perturbateur 17, sont, pour l'un 22', sensiblement au contact de la jambe d'extrémité correspondante 15 et, pour l'autre 23', sensiblement en regard de la partie de liaison arrondie 13 du tube 6.

Les matériaux utilisés pour la paroi mince 10 et les perturbateurs 17 sont généralement des alliages d'aluminium identiques et sur ceux-ci (paroi mince et perturbateurs) sont déposés des revêtements de placage non représentés, destinés au brasage ultérieur dans un four.

Comme le montrent les figures 4-4A et 5-5A, les jambes d'extrémité adjacentes 15 de la paroi mince 10 s'étendent jusqu'à venir, par leurs tranches latérales 19, sensiblement au contact de la face interne 11 de la partie de base 12.

Selon cet aspect en dehors de la portée de l'invention, les plis d'extrémité 22' des perturbateurs 17 logés dans les canaux longitudinaux 16 viennent eux aussi sensiblement au contact respectif des jambes d'extrémité 15 et de la partie de base concernée 12, de sorte à former un renfort de liaison 24' entre les jambes d'extrémité 15 et la partie de base 12.

Chaque pli d'extrémité 22' constituant le renfort de liaison 24' présente, dans l'exemple des figures 4 et 4A, une forme de congé arrondi 25' correspondant simplement au début du profil sinusoïdal, et s'étendant entre la jambe d'extrémité libre 15 et la partie de base 12. Le bord libre longitudinal 26' du congé 25' se trouve par exemple au moins au tiers de la jambe par rapport à sa tranche, pour assurer ainsi un appui longitudinal correct et la forme arrondie du congé délimite, avec la jambe et la partie de base perpendiculaires entre elles, un jeu ou espace vide longitudinal 27'.

Aussi, la fixation de chaque pli d'extrémité de renfort 22' avec la jambe 15 et la partie de base 12 se fait par brasage, lors du passage du condenseur monté (tubes avec les perturbateurs intégrés et boîtes collectrices) dans le four prévu à cet effet. De façon connue, les revêtements de placage non représentés, destinés au brasage, sont déposés soit en totalité ou partiellement sur les deux faces ondulées du perturbateur et/ou sur la face interne de la paroi pliée formant le tube. Ainsi, de par l'agencement du pli d'extrémité 22' dans l'angle formé par chaque jambe avec la partie de base, on crée des effets de capillarité et de mouillabilité lors du passage de la brasure déposée de l'état solide à l'état liquide, laquelle tend à s'écouler et à s'accumuler autour du renfort 24' et à venir ainsi de part et d'autre du sommet 20 du congé arrondi 25' en remplissant, de plus, le jeu 27' entre ce congé arrondi de renfort 24', la jambe 15 et la partie de base 12, et sur le bord libre 26' du congé. Les zones ou cordons de brasure obtenues sont indiquées en ZB sur la figure 4A et montrent bien la solidarisation par brasure de chaque jambe 15 avec la partie de base 12 par l'intermédiaire du pli d'extrémité 22' du perturbateur 17 faisant office de renfort 24'.

On comprend donc, que les deux jambes d'extrémité adjacentes initialement libres 15 sont prises en sandwich par les plis de renfort lesquels sont brasés sur toute leur longueur avec les jambes et la partie de base, garantissant la tenue mécanique des tubes 6 même à des pressions importantes.

Dans l'exemple illustré sur les figures 5 et 5A, le pli d'extrémité 22' de chaque perturbateur 17 est coudé en formant un angle droit. Ainsi, un premier rabat 28' du pli est parallèle à la jambe 15 et s'applique contre celle-ci depuis sa tranche latérale 19 jusqu'à environ le tiers de la jambe, et un second rabat plat 29', coudé à 90° par rapport au premier rabat 28', s'applique contre la partie de base correspondante 12. Ce second rabat 29' se prolonge ensuite de façon usuelle en une forme sinusoïdale, les sommets 20 venant alternativement s'appliquer contre la face interne 11 de la paroi de base 12 et de la partie de dessus 14 concernée.

Ces plis d'extrémité 22', en forme de cornière en L, constitue les renforts de liaison coudés 24' lesquels solidarisent par brasure les jambes adjacentes d'extrémité 15 initialement libres, à la partie de base 12 du tube. On a symbolisé, sur la figure 5A, les zones de brasure ZB obtenues notamment par des dépôts importants au niveau du bord libre 30 du premier rabat 28' avec la jambe 15, et du changement d'angle entre le second rabat 29' et la partie de base 12. La zone de brasure ZB s'étend également, mais avec une moindre épaisseur, entre les surfaces de contact des rabats 28', 29' et celles correspondantes des jambes 15 et de la partie de base 12.

Au lieu d'utiliser deux perturbateurs 17 à simple réseau de plis, identiques, dans les deux canaux longitudinaux 16 du tube 6, on peut utiliser, dans certains cas, un seul perturbateur 40' double ayant alors deux réseaux parallèles distincts 31' de plis ondulés 32'.

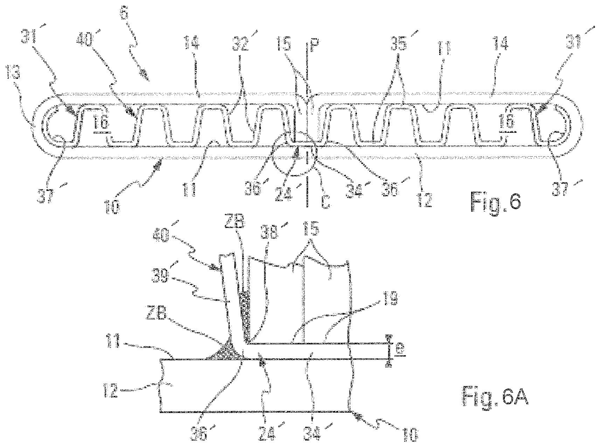

De la sorte, comme le montrent les figures 6 et 6A, les tranches latérales 19 terminant les jambes d'extrémité adjacentes 15 du tube plié 6 sont à distance de la face interne 11 de la partie de base 12. La distance d'écartement correspond alors sensiblement à l'épaisseur de paroi e du perturbateur 40' et notamment à la partie de liaison centrale plane 34' de celui-ci réunissant les deux réseaux identiques 31', de plis ondulés 32'. Ainsi, l'introduction du perturbateur monobloc 40' à deux réseaux 31' peut se faire en engageant la partie de liaison centrale 34' dans l'écartement laissé entre les tranches 19 des jambes 15 et la face interne 11 de la partie de base 12 du tube 6. Les deux réseaux 31' s'engagent simultanément et totalement dans les canaux oblongs 16, comme précédemment, avec les sommets 35' des plis 32' coopérant avec la face interne 11 de la partie de base 12 et les parties de dessus concernées 14.

Pour solidariser les jambes 15 initialement libres, les plis constituant les renforts de liaison 24' de l'invention sont considérés comme étant les premiers plis d'extrémité 36' des réseaux issus de la partie centrale 34' et tournés vers les jambes, par opposition aux derniers plis d'extrémité 37' tournés vers les parties de liaison 13. Ces premiers plis 36' de renfort sont coudés au niveau des arêtes extérieures 38' des tranches 19 et sont formés en partie par la zone centrale plane 34' et par les prolongements latéraux 39' issus de celle-ci, s'étendant en direction des parties de dessus respectives 14 pour s'écarter progressivement des jambes d'extrémité. L'inclinaison donnée à ces prolongements latéraux 39' des premiers plis 36' de renfort de liaison 24' préfigure la forme des ondulations des deux réseaux 31' de plis laquelle, dans l'exemple illustré sur les figures 6 et 6A, est du type à créneaux, notamment trapézoïdaux. Toute autre forme appropriée, par exemple carrée, voire sinusoïdale, pourrait être également envisagée.

Ces premiers plis 36' de renfort assurent la rigidification du tube plié 6 par l'intermédiaire des zones de brasure ZB notamment obtenus par les revêtements de placage usuels, d'une part, au niveau de l'angle formé par chaque arrête 38' entre la jambe 15 et le prolongement incliné 39' et, d'autre part, au niveau de l'angle entre le prolongement incliné 39' et la partie de base 12.

Sur la figure 6, on voit que la largeur de la partie centrale de liaison 34' correspond sensiblement à la somme des épaisseurs des deux jambes adjacentes 15.

Par la mise en place des plis d'extrémité à renfort de liaison sur les perturbateurs du côté des extrémités libres des jambes avec la partie de base de la paroi, on garantit la résistance mécanique du tube même sous de forte pression, par l'intermédiaire des brasures importantes tendant à se déposer en grande quantité, notamment par effet de capillarité, le long des plis d'extrémité rapportés contre les jambes et la partie de base du tube.

## Revendications

1. Tube de circulation de fluide pour échangeur de chaleur, du type obtenu par pliage, et comprenant une paroi (10) définissant, une partie de base (12) et des jambes d'extrémité libres (15), tournées perpendiculairement vers la partie de base, ledit tube comprenant un perturbateur à plis, prévu à l'intérieur dudit tube, ledit perturbateur (17) présentant une partie (23), dite centrale, s'insérant entre les jambes d'extrémité libres (15) et la partie de base (12), parallèlement à celle-ci,
**caractérisé en ce que** ladite partie centrale (23) du perturbateur présente, entre au moins deux plis adjacents, une région plane dont la largeur (L) est égale à la somme des épaisseurs (E) des jambes d'extrémité libres augmentée, respectivement de part et d'autre, d'une distance de sécurité (D), apte à inclure les dispersions d'inclinaison pouvant être prises par les jambes d'extrémité libres (15) par rapport à leur position nominale, perpendiculaire à ladite partie de base, chaque distance de sécurité (D) est sensiblement égale à la projection, sur la partie centrale (23), de la hauteur de la jambe d'extrémité libre (15) avec une inclinaison comprise entre 20° et 45° par rapport à la position nominale, perpendiculaire à ladite partie de base,
**en ce que**, à distance des extrémités du tube, les extrémités (19) desdites jambes d'extrémité libres (15) sont au contact de l'une des faces de la partie centrale (23) du perturbateur, par leur tranche, la partie centrale (23) du perturbateur étant par son autre face au contact de la partie de base (12) du tube.

2. Tube selon la revendication 1, dans lequel chaque distance de sécurité (D) est sensiblement égale à la projection, sur la partie centrale (23), de la hauteur de la jambe d'extrémité libre (15) avec une inclinaison comprise entre 20° et 30° par rapport à la position nominale, perpendiculaire à ladite partie de base.

3. Tube selon l'une quelconque des revendications 1 à 2, dans lequel lesdites jambes d'extrémité libres (15) sont adjacentes et disposées dans le plan de symétrie longitudinal (P) de la paroi pliée (10) du tube en définissant deux canaux de réception identiques (16) dans lesquels sont insérés lesdits réseaux (20) de plis espacés par ladite partie centrale élargie (23).

4. Tube selon l'une quelconque des revendications précédentes 1 à 3, dans lequel le profil des plis (21) du perturbateur (17) est sinusoïdal.

5. Tube selon l'une quelconque des revendications précédentes 1 à 3, dans lequel le profil des plis (21) du perturbateur (17) est du type à créneaux.

6. Tube selon l'une quelconque des revendications 4ou 5 dans lequel la largeur L de la partie centrale du perturbateur est comprise entre 0,75 et 1,5 fois la période des plis du perturbateur.

7. Tube selon la revendication 6 dans lequel la largeur L de la partie centrale du perturbateur est sensiblement égale à 1 fois la période des plis du perturbateur.

8. Echangeur de chaleur **caractérisé en ce qu'**il comporte au moins une pluralité de tubes parallèles (6) de circulation de fluide à perturbateurs intégrés (17), tels que définis selon l'une quelconque des revendications précédentes.

9. Echangeur de chaleur selon la revendication précédente, dans lequel il définit un condenseur (3) d'une boucle de climatisation (1) pour véhicule automobile ou analogue.

## Patentansprüche

1. Fluidzirkulationsrohr für einen Wärmetauscher, des Typs, der durch Biegen erhalten wird und eine Wand (10) umfasst, die einen Unterteil (12) und freie Endschenkel (15), die senkrecht zum Unterteil hin gerichtet sind, definiert, wobei das Rohr einen gefalteten Turbulator umfasst, der im Inneren des Rohres vorgesehen ist, wobei der Turbulator (17) einen sogenannten zentralen Teil (23) aufweist, der zwischen die freien Endschenkel (15) und den Unterteil (12) eingefügt ist, parallel zu Letzterem,
**dadurch gekennzeichnet, dass** der zentrale Teil (23) des Turbulators zwischen wenigstens zwei benachbarten Falten einen ebenen Bereich aufweist, dessen Breite (L) gleich der Summe der Dicken (E) der freien Endschenkel ist, auf beiden Seiten jeweils vergrößert um einen Sicherheitsabstand (D), der geeignet ist, die Streuungen der Neigung zu berücksichtigen, welche die freien Endschenkel (15) bezüglich ihrer zu dem Unterteil senkrechten Nennposition aufweisen können, wobei jeder Sicherheitsabstand (D) im Wesentlichen gleich der Projektion der Höhe des freien Endschenkels (15) mit einer Neigung zwischen 20° und 45° bezüglich der zu dem Unterteil senkrechten Nennposition auf den zentralen Teil (23) ist,
dadurch, dass in einem Abstand von den Enden des Rohres die Enden (19) der freien Endschenkel (15) sich mit ihrer Schnittkante in Kontakt mit einer der Seiten des zentralen Teils (23) des Turbulators befinden, wobei sich der zentrale Teil (23) des Turbulators mit seiner anderen Seite in Kontakt mit dem Unterteil (12) des Rohres befindet.

2. Rohr nach Anspruch 1, wobei jeder Sicherheitsabstand (D) im Wesentlichen gleich der Projektion der Höhe des freien Endschenkels (15) mit einer Neigung zwischen 20° und 30° bezüglich der zu dem Unterteil senkrechten Nennposition auf den zentralen Teil (23) ist.

3. Rohr nach einem der Ansprüche 1 bis 2, wobei die freien Endschenkel (15) benachbart sind und in der Längssymmetrieebene (P) der gefalteten Wand (10) des Rohres angeordnet sind, wobei sie zwei identische Aufnahmekanäle (16) definieren, in welche die durch den verbreiterten zentralen Teil (23) beabstandeten Netze (20) von Falten eingefügt sind.

4. Rohr nach einem der vorhergehenden Ansprüche 1 bis 3, wobei das Profil der Falten (21) des Turbulators (17) sinusförmig ist.

5. Rohr nach einem der vorhergehenden Ansprüche 1 bis 3, wobei das Profil der Falten (21) des Turbulators (17) zackenförmig ist.

6. Rohr nach einem der Ansprüche 4 oder 5, wobei die Breite L des zentralen Teils des Turbulators das 0,75- bis 1,5-Fache der Periode der Falten des Turbulators beträgt.

7. Rohr nach Anspruch 6, wobei die Breite L des zentralen Teils des Turbulators im Wesentlichen gleich dem 1-Fachen der Periode der Falten des Turbulators ist.

8. Wärmetauscher, **dadurch gekennzeichnet, dass** er wenigstens eine Vielzahl von parallelen Fluidzirkulationsrohren (6) mit integrierten Turbulatoren (17), wie nach einem der vorhergehenden Ansprüche definiert, aufweist.

9. Wärmetauscher nach dem vorhergehenden Anspruch, wobei er einen Verflüssiger (3) eines Klimakreislaufs (1) für ein Kraftfahrzeug oder dergleichen definiert.

## Claims

1. Fluid circulation tube for a heat exchanger, of the type produced by bending, and comprising a wall (10) defining a base portion (12) and free end legs (15), turned perpendicularly toward the base portion, said tube comprising a disrupter with bends provided inside said tube, said disrupter (17) having a portion (23), called the central portion, which is inserted between the free end legs (15) and the base portion (12), parallel to the latter,
**characterized in that** said central portion (23) of the disrupter has, between at least two adjacent bends, a flat region of which the width (L) is equal to the sum of the thicknesses (E) of the free end legs, increased on each side by a distance called the safety distance (D) which allows for the range of inclinations which the free end legs (15) may assume relative to their nominal position perpendicular to said base portion, each safety distance (D) is substantially equal to the projection onto the central portion (23) of the height of the free end leg (15) with an inclination of between 20° and 45° relative to the nominal position perpendicular to said base portion, **in that**, at a distance from the ends of the tube, the ends (19) of said free end legs (15) are in contact, by their crosscut edges, with one of the faces of the central portion (23) of the disrupter, the other face of the central portion (23) of the disrupter being in contact with the base portion (12) of the tube.

2. Tube according to Claim 1, wherein each safety distance (D) is substantially equal to the projection onto the central portion (23) of the height of the free end leg (15) with an inclination of between 20° and 30° relative to its nominal position perpendicular to said base portion.

3. Tube according to either of Claims 1 and 2, wherein said free end legs (15) are adjacent and arranged in the longitudinal plane of symmetry (P) of the bent wall (10) of the tube, forming two identical receiving channels (16) into which said systems (20) of bends, separated by said enlarged central portion (23), are inserted.

4. Tube according to any of the preceding Claims 1 to 3, wherein the profile of the bends (21) of the disrupter (17) is sinusoidal.

5. Tube according to any of the preceding Claims 1 to 3, wherein the profile of the bends (21) of the disrupter (17) is crenellated.

6. Tube according to either of Claims 4 and 5, wherein the width L of the central portion of the disrupter is between 0.75 and 1.5 times the period of the bends of the disrupter.

7. Tube according to Claim 6, wherein the width L of the central portion of the disrupter is substantially equal to once the period of the bends of the disrupter.

8. Heat exchanger, **characterized in that** it includes at least a plurality of parallel fluid circulation tubes (6) with incorporated disrupters (17) as defined in any of the preceding claims.

9. Heat exchanger according to the preceding claim, wherein the exchanger forms a condenser (3) of an air conditioning loop (1) for a motor vehicle or the like.
